# EUROPEAN PATENT APPLICATION

(11) **EP 2 242 234 A1**
(43) Date of publication of application: **20.10.2010**
(21) Application number: 09741689.5
(22) Date of filing: 23.04.2009
(51) Int. Cl.: H04L 29/06

(54) **METHOD, SYSTEM AND CUSTOMER PREMISES EQUIPMENT FOR VOICE SERVICE SWITCHING BETWEEN DIFFERENT NETWORKS**

(30) Priority: 07.05.2008 CN 200810105996
(71) Applicant: Huawei Device Co., Ltd., Shenzhen, Guangdong 518129 (CN)
(72) Inventor: ZHANG, Ke, Shenzhen Guangdong 518129 (CN); ZHANG, Kai, Shenzhen Guangdong 518129 (CN); CHEN, Bichao, Shenzhen Guangdong 518129 (CN)
(74) Representative: Pfenning, Meinig & Partner GbR
(86) International application number: PCT/CN2009/071415
(87) International publication number: WO 2009/135414

(57) **Abstract**

A method and a system for switching a voice service between different networks as well as a Customer Premises Equipment (CPE) are disclosed herein. The CPE includes: a switching control module, configured to determine the mode of transmitting voice and switch between the fixed network and the mobile network; a terminal service processing module; a wireless service processing module; a wired service processing module; and a central service processing module, configured to: receive the event information sent by the terminal service processing module, or the wireless service processing module, or the wired service processing module; perform operations indicated in the event information; and send event information for controlling one or more of the following modules: the terminal service processing module, the wireless service processing module, and the wired service processing module. The embodiments of the present invention enable free switching of a voice service between the mobile network and the fixed network, and reduce the risks of voice transmission failure caused by faults in a network.

## Description

This application claims priority to Chinese Patent Application No. 200810105996.7, filed with the Chinese Patent Office on May 07, 2008 and entitled "Method and System for Switching Voice Service Between Different Networks, Customer Premises Equipment", which is hereby incorporated by reference in its entirety.

### FIELD OF THE INVENTION

The present invention relates to voice communications, and in particular, to a method and a system for switching a voice service between different networks, and Customer Premises Equipment (CPE).

### BACKGROUND OF THE INVENTION

With development of communications technologies, signals can be transmitted through the traditional Public Switched Telephone Network (PSTN), or through the Voice over International Protocol (VoIP) on an Internet Protocol (IP)-based network, or in a wireless mode on a mobile network.

The traditional PSTN transmission mode has developed for a long time and is mature with respect to quality and security. However, the voice transmission in a PSTN is based on a circuit switching technology, and fixed lines are required for bearing voices, thus leading to high costs and complex maintenance. Immobility of communication terminals is a bottleneck of the PSTN.

The VoIP-based voice transmission on an IP-based network is cost-efficient, and is developing rapidly, but provides low Quality of Service (QoS) and low reliability.

In the voice transmission performed in a wireless mode based on a mobile network, the communication terminal is moveable and portable. However, the coverage of a wireless network is narrow. Voice transmission is impossible when the communication terminal moves to an area beyond coverage of wireless signals.

### SUMMARY OF THE INVENTION

The embodiments of the present invention provide a method and a system for switching a voice service between different networks and a CPE to overcome the problems in the prior art, that is, to enable a voice service to be switched between a fixed network and a mobile network freely, and reduce risks of voice transmission failure caused by faults in a network.

A CPE provided in an embodiment of the present invention includes:
a switching control module, configured to: determine a mode of transmitting voice according to link connection state information of a fixed network and a mobile network, and switch between the fixed network and the mobile network accordingly;
a terminal service processing module, configured to: receive voice data and/or event information of a communication terminal, and transmit the voice data between the communication terminal and the fixed network or mobile network;
a wireless service processing module, connected to the terminal service processing module and configured to receive the voice data and/or event information from the mobile network, or the voice data sent by the terminal service processing module;
a wired service processing module, connected to the terminal service processing module and configured to receive the voice data and/or event information from the fixed network, or the voice data sent by the terminal service processing module; and
a central service processing module, connected to the switching control module, terminal service processing module, wireless service processing module, and wired service processing module, and configured to: receive the event information sent by the terminal service processing module, and/or the wireless service processing module, and/or the wired service processing module; perform operations indicated in the event information; and send event information for controlling one or more of the following modules: the terminal service processing module, the wireless service processing module, and the wired service processing module.

A system for switching a voice service between different networks in an embodiment of the present invention includes a CPE connected to a communication terminal.

The CPE includes:
a switching control module, configured to: determine a mode of transmitting voice according to link connection state information of a fixed network and a mobile network, and switch between the fixed network and the mobile network accordingly;
a terminal service processing module, configured to: receive voice data and/or event information of the communication terminal, and transmit the voice data between the communication terminal and the fixed network or mobile network;
a wireless service processing module, connected to the terminal service processing module, and configured to receive the voice data and/or event information from the mobile network, or the voice data sent by the terminal service processing module;
a wired service processing module, connected to the terminal service processing module, and configured to receive the voice data and/or event information from the fixed network, or the voice data sent by the terminal service processing module; and
a central service processing module, connected to the switching control module, terminal service processing module, wireless service processing module, and wired service processing module, and configured to: receive the event information sent by the terminal service processing module, and/or the wireless service processing module, and/or the wired service processing module; perform operations indicated in the event information; and send event information for controlling one or more of the following modules: the terminal service processing module, the wireless service processing module, and the wired service processing module.

A method for switching a voice service between different networks in an embodiment of the present invention includes:
establishing a network link between a communication terminal and a fixed network, and registering with the fixed network; and
if the registration fails, switching from the fixed network to a mobile network to transmit event information and/or voice data between the communication terminal and the mobile network.

In the embodiments of the present invention, the CPE includes a switching control module, a wireless service processing module, and a wired service processing module, and makes full use of the merits of transmitting the voice service in the mobile network and the fixed network to enable free switching of the voice service between the mobile network and the fixed network. Moreover, through the mode in which the voice is transmitted via dual links, the technical solution under the present invention reduces risks of voice transmission failure caused by faults in a network, overcomes the drawbacks of narrow coverage of signals when the voice service is transmitted in a mobile network alone, overcomes the drawbacks of immobility of the communication terminal and complexity and high costs of line maintenance when the voice service is transmitted in a fixed network alone, and integrates the mobile network with the fixed network.

### BRIEF DESCRIPTION OF THE DRAWINGS

FIG. 1 shows a structure of a CPE in Embodiment 1 of the present invention;
FIG. 2 shows a structure of a CPE in Embodiment 2 of the present invention;
FIG. 3 shows a structure of a CPE in Embodiment 3 of the present invention;
FIG. 4 is a flowchart of a method for switching a voice service between different networks in an embodiment of the present invention; and
FIG. 5 shows a structure of a system for switching a voice service between different networks in an embodiment of the present invention.

### DETAILED DESCRIPTION OF THE EMBODIMENTS

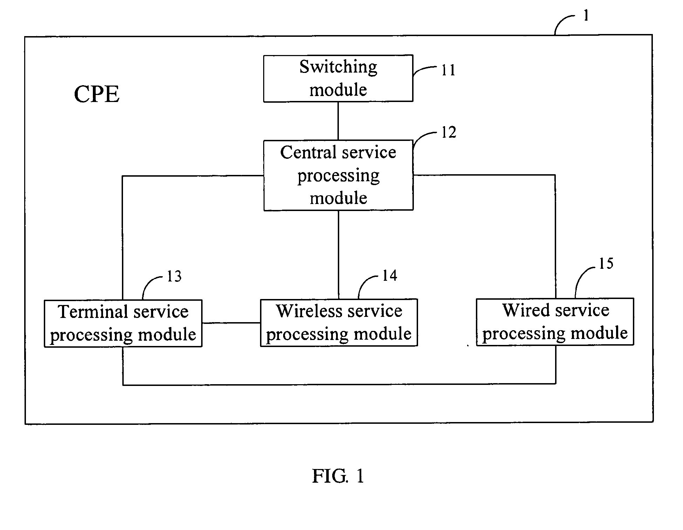

FIG. 1 shows a structure of a CPE in Embodiment 1 of the present invention. The CPE 1 includes:
a switching control module 11, configured to: determine a mode of transmitting voice according to link connection state information of a fixed network and a mobile network, and switch between the fixed network and the mobile network accordingly;
a terminal service processing module 13, configured to: receive voice data and/or event information of a communication terminal, and transmit the voice data between the communication terminal and the fixed network or mobile network;
a wireless service processing module 14, connected to the terminal service processing module 13, and configured to receive the voice data and/or event information from the mobile network, or the voice data sent by the terminal service processing module 13;
a wired service processing module 15, connected to the terminal service processing module 13, and configured to receive the voice data and/or event information from the fixed network, or the voice data sent by the terminal service processing module 13; and
a central service processing module 12, connected to the switching control module 11, terminal service processing module 13, wireless service processing module 14, and wired service processing module 15, and configured to: receive the event information sent by the terminal service processing module 13, and/or the wireless service processing module 14, and/or the wired service processing module 15; perform operations indicated in the event information; and send event information for controlling the terminal service processing module 13, and/or the wireless service processing module 14, and/or the wired service processing module 15.

In Embodiment 1 of the present invention, the CPE includes a switching control module, a wireless service processing module, and a wired service processing module, and makes full use of the merits of transmitting the voice service in the mobile network and the fixed network to enable free switching of the voice service between the mobile network and the fixed network. Moreover, through the voice being transmitted via dual links, the technical solution under the present invention reduces risks of voice transmission failure caused by faults in a network, overcomes the drawbacks of narrow coverage of signals when the voice service is transmitted in a mobile network alone, overcomes the drawbacks of immobility of the communication terminal and complexity and high costs of line maintenance when the voice service is transmitted in a fixed network alone, and integrates the mobile network with the fixed network.

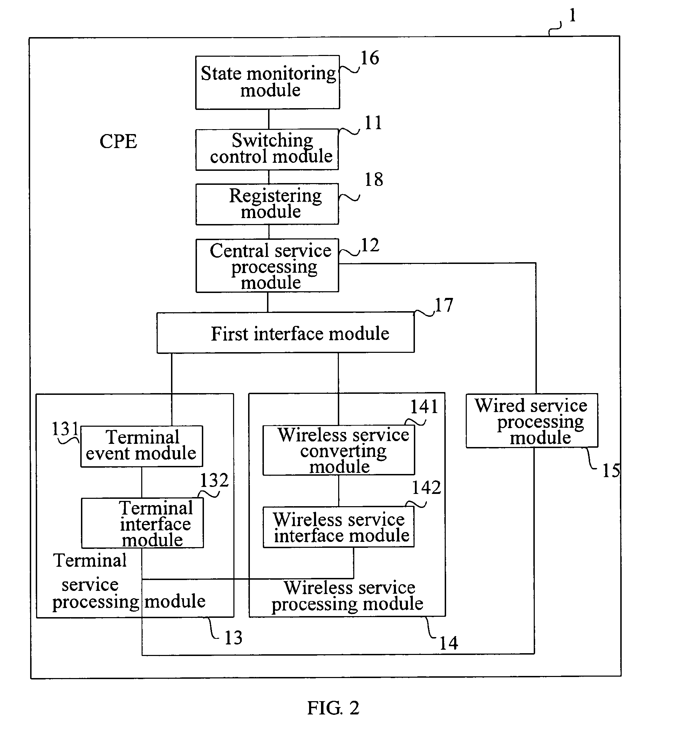

FIG. 2 shows a structure of a CPE in Embodiment 2 of the present invention. In Embodiment 2, the wireless service processing module14 includes:
a wireless service converting module 141, connected to the central service processing module 12, and configured to: convert the received event information into information in a format that the central service processing module 12 is capable of processing, and send the converted event information to the central service processing module 12, or receive the event information sent by the central service processing module 12; and
a wireless service interface module 142, connected to the wireless service converting module 141, and configured to: receive the voice data and/or event information from the mobile network, send the received voice data to the terminal service processing module 13, and send the received event information to the wireless service converting module 141.

The terminal service processing module 13 in FIG. 2 includes:
a terminal event module 131, configured to: send the received event information to the central service processing module 12, or receive the event information sent by the central service processing module 12; and
a terminal interface module 132, configured to: receive the event information and/or voice data of the communication terminal, send the received event information to the terminal event module 131, and send the received voice data to the wireless service interface module 142 or the wired service processing module 15.

The CPE in FIG. 2 may further include:
a state monitoring module 16, configured to: obtain link connection state information of the fixed network and the mobile network, and send the link connection state information to the switching control module 11;
a first interface module 17, configured to: forward the event information sent by the terminal service processing module 13 or the wireless service processing module 14 to the central service processing module 12, or forward the event information sent by the central service processing module 12 to the terminal service processing module 13 or wireless service processing module 14 to implement interchange between the lower-layer hardware event information reported by the terminal service processing module 13 or wireless service processing module 14 and the software control command in the central service processing module 12; and
a registering module 18, connected to the switching control module 11 and the central service processing module 12, and configured to: register with the determined network for transmitting voice after the switching control module 11 determines the mode of transmitting voice, and send information indicative of registration success or failure to the central service processing module 12. The central service processing module 12 controls the switching control module 11 to switch to another network except the determined network for transmitting voice when receiving the information indicative of registration failure.

Currently, many CPEs can implement voice transmission between the communication terminal and the fixed network based on the Internet transport protocol, for example, router, home gateway, and personal computer. In the embodiment described above, a wireless service processing module and a switching control module are added on the basis of the existing CPE to implement free switching of the voice service between the mobile network and the fixed network. Moreover, through the voice being transmitted via dual links, the technical solution provided in this embodiment reduces risks of voice transmission failure caused by faults in a network, overcomes the drawbacks of narrow coverage of signals when the voice service is transmitted in a mobile network alone, overcomes the drawbacks of immobility of the communication terminal and complexity and high costs of line maintenance when the voice service is transmitted in a fixed network alone, and integrates the mobile network with the fixed network.

The working principles of the CPE provided in this embodiment are described below with reference to FIG. 2.

When the first communication terminal dials a call to the second communication terminal, the CPE on the first communication terminal side starts working. The terminal interface module 132 in the terminal service processing module 13 in this CPE receives the event information of the communication terminal, namely, dial digit, and sends the event information to the terminal event module 131.

The terminal event module 131 judges whether enough resources are currently available for processing the current communication event; if so, the terminal event module 131 converts the received event information into information in a data format that the central service processing module 12 is capable of processing. Because the event information comes from the communication terminal, the format of the event information may be different from the data format in the central service processing module 12. Therefore, the event information needs to be converted by the wireless service converting module 142. The wireless service converting module 142 sends the processed event information to the central service processing module 12 through the first interface module 17.

After the central service processing module 12 receives the event information reported by the terminal event module 131, the control state monitoring module 16 obtains the current network connection state information, and sends the obtained network connection state information to the switching control module 11. The switching control module 11 judges whether the fixed network link is established between the current communication terminal and the fixed network that transmits voice based on the VoIP technology, and, if the fixed network link is established, initiates registration with the fixed network that transmits voice based on the VoIP technology. If the registration succeeds, the event information or voice data is transmitted between the communication terminal and the network that transmits voice based on the VoIP technology. If no fixed network link is established or the registration fails, the voice service is switched from the fixed network that transmits voice based on the VoIP technology to the mobile network that bears voice based on the Circuit Switched (CS) domain, and the event information or voice data is transmitted between the communication terminal and the mobile network that bears voice based on the CS.
(1) If the switching control module decides to transmit voice in a wireless mode, and the registration on the mobile network that bears voice based on the CS domain succeeds, the switching control module sends a notification message that instructs the central service processing module to transmit voice in a wireless mode.

After receiving the notification message from the switching control module 11, the central service processing module 12 establishes a communication channel, and re-encapsulates event information according to the event information sent by the terminal event module 131. The re-encapsulated event information may include the telephone number of the second communication terminal, and instructs the CPE on the second communication terminal side to start ringing after receiving the event information and then send a response. The re-encapsulated event information is sent to the wireless service converting module 141 through the first interface module 17.

After receiving the re-encapsulated event information from the central service processing module 12, the wireless service converting module 141 converts the event information into a format transmissible in the mobile network that transmits voice based on the CS domain, and sends the event information to the network side through the wireless service interface module 142.

If the CPE on the second communication terminal side agrees to establish communication after receiving the event information sent by the CPE on the first communication terminal side, the second communication terminal starts sending voice data when the second communication terminal goes off-hook.

The wireless service converting module 142 in the CPE on the first communication terminal side sends the voice data received from the network side to the terminal interface module 132, and the terminal interface module 132 sends the voice data to the communication terminal. In this way, the voice can be transmitted between the first communication terminal and the second communication terminal.
(2) If the switching control module decides to transmit voice in a wired mode, and the registration on the fixed network that transmits voice based on the Internet transport protocol succeeds, the switching control module sends a notification message that instructs the central service processing module to transmit voice in a wired mode.

After receiving the notification message from the switching control module 11, the central service processing module 12 establishes a communication channel, and re-encapsulates event information according to the event information sent by the terminal event module 131. The re-encapsulated event information may include the telephone number of the second communication terminal, and instructs the CPE on the second communication terminal side to start ringing after receiving the event information and then send a response. The re-encapsulated event information is sent to the wired service processing module 15 through the central service processing module 12.

In Embodiment 2 of the present invention, the CPE includes a switching control module, a wireless service processing module, and a wired service processing module, and makes full use of the merits of transmitting the voice service in the mobile network and the fixed network to enable free switching of the voice service between the mobile network and the fixed network. Moreover, through the voice being transmitted via dual links, the technical solution under the present invention reduces risks of voice transmission failure caused by faults in a network, overcomes the drawbacks of narrow coverage of signals when the voice service is transmitted in a mobile network alone, overcomes the drawbacks of immobility of the communication terminal and complexity and high costs of line maintenance when the voice service is transmitted in a fixed network alone, and integrates the mobile network with the fixed network.

The voice transmission between the communication terminal and the fixed network that transmits voice based on the Internet transport protocol may be implemented on many CPEs, and is not detailed here any further.

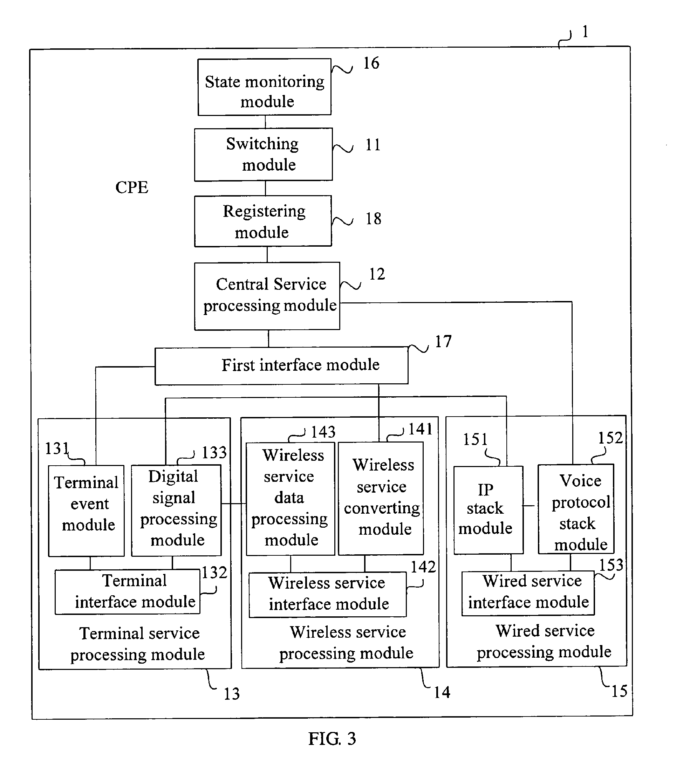

FIG. 3 shows a structure of a CPE in Embodiment 3 of the present invention. This embodiment gives an exemplary structure of a home gateway. As a bearer on the customer side, the home gateway implements integration between the mobile network and the fixed network appropriately. The CPE shown in FIG. 3 includes two additional modules: wireless service processing module 14 and switching control module 11 on the basis of the existing home gateway. Compared with the embodiment in FIG 2, the embodiment in FIG 3 includes two additional modules: a Digital Signal Processing (DSP) module 133 and a wireless service data processing module 143. The DSP module 133 exists in the home gateway in the prior art, and is connected to the voice data bus and the terminal interface module 132. In order to implement voice data transmission between the wireless service processing module 14 and the terminal service processing module 13 through the voice data bus, the wireless service processing module 14 in FIG. 3 includes an additional module: the wireless service data processing module 143 is connected to the voice data bus and the wireless service interface module 142.

The wired service processing module 15 in the home gateway in FIG. 3 includes an IP stack module 151, a voice protocol stack module 152, and a wired service interface module 153. When voice is transmitted in a wired mode, the IP stack module 151 converts the event information or voice data from the network side into a format transmissible to the central service processing module 12 or DSP module 133. For example, the IP stack module 151 removes the IP header and the User Datagram Protocol (UDP) header of the IP packet, or converts the voice data from the DSP module 133 or the event information from the central service processing module 12 into the data format transmissible in the network that transmits voice based on the Internet transport protocol. The voice protocol stack module 152 is configured to: analyze the event information received from the IP stack module 151, retrieve the control instruction from the event information, and convert the event information into information in a format that the central service processing module 12 is capable of processing; or convert the event information received from the central service processing module 12 into information in a format that the IP stack module 151 is capable of processing.

In Embodiment 3 of the present invention, the CPE includes a switching control module, a wireless service processing module, and a wired service processing module, and makes full use of the merits of transmitting the voice service in the mobile network and the fixed network to enable free switching of the voice service between the mobile network and the fixed network. Moreover, through the voice being transmitted via dual links, the technical solution under the present invention reduces risks of voice transmission failure caused by faults in a network, overcomes the drawbacks of narrow coverage of signals when the voice service is transmitted in a mobile network alone, overcomes the drawbacks of immobility of the communication terminal and complexity and high costs of line maintenance when the voice service is transmitted in a fixed network alone, and integrates the mobile network with the fixed network.

The mobile network involved in this embodiment bears voice based on the CS domain, and may be a 2nd Generation (2G) mobile communication network or a 3rd Generation (3G) mobile communication network; the fixed network transmits voice based on the VoIP technology, and may be a Next Generation Network (NGN).

The method for switching a voice service between different networks in the present invention may be:
establishing a network link between a communication terminal and a fixed network, and registering with the fixed network; and
if the registration fails, switching from the fixed network to a mobile network to transmit event information and/or voice data between the communication terminal and the mobile network.

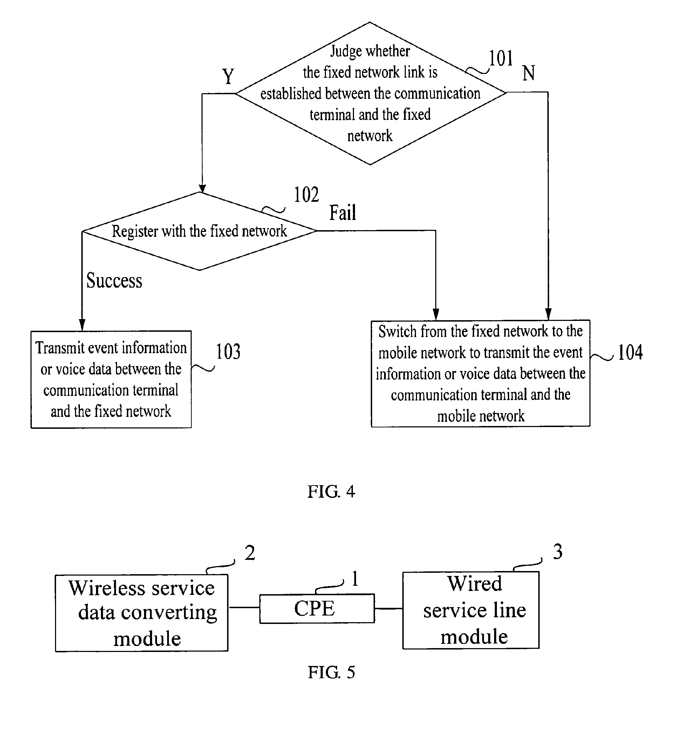

FIG. 4 is a flowchart of a method for switching a voice service between different networks in an embodiment of the present invention. The method includes the following blocks:
Block 101: Judge whether the fixed network link is established between the communication terminal and the fixed network. If the fixed network link is established, proceed to block 102; if the fixed network link is not established, proceed to block 104.
Block 102: Register with the fixed network. If the registration succeeds, proceed to block 103; if the registration fails, proceed to block 104.
Block 103: Transmit event information or voice data between the communication terminal and the fixed network.
Block 104: Switch from the fixed network to the mobile network to transmit the event information or voice data between the communication terminal and the mobile network.

The transmitting of the event information between the communication terminal and the mobile network is:
receiving the event information from the mobile network, performing operations indicated in the received event information, and sending event information for controlling the communication terminal to perform the corresponding operations to the communication terminal; or
receiving the event information from the communication terminal, performing operations indicated in the received event information, and sending event information for controlling the network side to perform the corresponding operations to the mobile network.

The method may further include:
obtaining connection state information of the fixed network link and the mobile network link.

In the method for switching a voice service between different networks in this embodiment, the technical solution makes full use of the merits of transmitting the voice service in the mobile network and the fixed network to enable free switching of the voice service between the mobile network and the fixed network. Moreover, through the voice being transmitted via dual links, the technical solution reduces risks of voice transmission failure caused by faults in a network, overcomes the drawbacks of narrow coverage of signals when the voice service is transmitted in a mobile network alone, overcomes the drawbacks of immobility of the communication terminal and complexity and high costs of line maintenance when the voice service is transmitted in a fixed network alone, and integrates the mobile network with the fixed network.

FIG. 5 shows a structure of a system for switching a voice service between different networks in an embodiment of the present invention. The system includes: a CPE 1, a wireless service data converting module 2, and a wired service line module 3. The wireless service data converting module 2 is configured to convert the voice data or event information from the CPE 1 into wireless signals transmissible in the mobile network, or convert the wireless signals from the mobile network into the data processible in the CPE 1. Specifically, the wireless service data converting module 2 may be a High Speed Packet Access (HSPA) wireless network adapter, and the wireless service line module 3 is configured to bear data between the CPE 1 and the fixed network.

In the system for switching a voice service between different networks in this embodiment, the CPE includes a switching control module, a wireless service processing module, and a wired service processing module, and makes full use of the merits of transmitting the voice service in the mobile network and the fixed network to enable free switching of the voice service between the mobile network and the fixed network. Moreover, through the voice being transmitted via dual links, the system reduces risks of voice transmission failure caused by faults in a network, overcomes the drawbacks of narrow coverage of signals when the voice service is transmitted in a mobile network alone, overcomes the drawbacks of immobility of the communication terminal and complexity and high costs of line maintenance when the voice service is transmitted in a fixed network alone, and integrates the mobile network with the fixed network.

It should be noted that the above embodiments are merely provided for elaborating the technical solutions of the present invention, but not intended to limit the present invention. Although the present invention has been described in detail with reference to the foregoing embodiments, it is apparent that person having ordinary skill in the art can make various modifications or equivalent replacements to the technical solutions of the invention without departing from the scope of the invention. Any modification, equivalent replacement, or improvement made without departing from the present invention should fall within the scope of the present invention.

## Claims

1. A Customer Premises Equipment (CPE), comprising:
a switching control module, configured to: determine a mode of transmitting voice according to link connection state information of a fixed network and a mobile network, and switch between the fixed network and the mobile network accordingly;
a terminal service processing module, configured to: receive voice data and/or event information of a communication terminal, and transmit the voice data between the communication terminal and the fixed network or mobile network;
a wireless service processing module, connected to the terminal service processing module and configured to receive the voice data and/or event information from the mobile network, or the voice data sent by the terminal service processing module;
a wired service processing module, connected to the terminal service processing module and configured to receive the voice data and/or event information from the fixed network, or the voice data sent by the terminal service processing module; and
a central service processing module, connected to the switching control module, the terminal service processing module, the wireless service processing module, and the wired service processing module, and configured to: receive the event information sent by the terminal service processing module, and/or the wireless service processing module, and/or the wired service processing module; perform operations indicated in the event information; and send event information for controlling one or more of the following modules: the terminal service processing module, the wireless service processing module, and the wired service processing module.

2. The CPE according to claim 1, wherein the wireless service processing module comprises:
a wireless service converting module, connected to the central service processing module and configured to: convert the received event information into information in a format that the central service processing module is capable of processing, and send the converted event information to the central service processing module, or receive the event information sent by the central service processing module; and
a wireless service interface module, connected to the wireless service converting module and configured to: receive the voice data and/or event information from the mobile network, send the received voice data to the terminal service processing module, and send the received event information to the wireless service converting module.

3. The CPE according to claim 2, wherein the terminal service processing module comprises:
a terminal event module, connected to the central service processing module and configured to: send the received event information to the central service processing module, or receive the event information sent by the central service processing module; and
a terminal interface module, connected to the terminal event module and configured to: receive the event information and/or the voice data of the communication terminal, send the received event information to the terminal event module, and send the received voice data to the wireless service interface module or the wired service processing module.

4. The CPE according to claim 3, wherein:
the terminal service processing module further comprises:
a Digital Signal Processing (DSP) module, connected to the terminal interface module and configured to receive the voice data sent by the terminal interface module;
the wireless service processing module further comprises:
a wireless service data processing module, connected to the DSP module and the wireless service interface module and configured to: receive the voice data sent by the DSP module and send the received voice data to the wireless service interface module.

5. The CPE according to any one of claims 1-4, further comprising:
a first interface module, configured to: forward the event information sent by the terminal service processing module and the wireless service processing module to the central service processing module, or forward the event information sent by the central service processing module to the terminal service processing module or the wireless service processing module to implement interchange between lower-layer hardware event information reported by the terminal service processing module or the wireless service processing module and a software control command in the central service processing module.

6. The CPE according to any one of claims 1-4, further comprising:
a state monitoring module, connected to the switching control module and configured to: obtain link connection state information of the fixed network and the mobile network, and send the link connection state information to the switching control module.

7. The CPE according to any one of claims 1-4, wherein:
the CPE is a home gateway, or router, or personal computer.

8. The CPE according to any one of claims 1-4, further comprising:
a registering module, connected to the switching control module and the central service processing module and configured to: register with a determined network for transmitting voice after the switching control module determines a mode of transmitting voice, and send information indicative of registration success or failure to the central service processing module, wherein the determined network for transmitting voice is the fixed network or the mobile network;
the central service processing module is further configured to control the switching control module to switch to another network except the determined network for transmitting voice when receiving the information indicative of registration failure.

9. A system for switching a voice service between different networks, comprising a Customer Premises Equipment (CPE) connected to a communication terminal, wherein:
the CPE comprises:
a switching control module, configured to: determine a mode of transmitting voice according to link connection state information of a fixed network and a mobile network, and switch between the fixed network and the mobile network accordingly;
a terminal service processing module, configured to: receive voice data and/or event information of the communication terminal, and transmit the voice data between the communication terminal and the fixed network or the mobile network;
a wireless service processing module, connected to the terminal service processing module, and configured to receive the voice data and/or the event information from the mobile network, or the voice data sent by the terminal service processing module;
a wired service processing module, connected to the terminal service processing module and configured to receive the voice data and/or the event information from the fixed network, or the voice data sent by the terminal service processing module; and
a central service processing module, connected to the switching control module, the terminal service processing module, the wireless service processing module, and the wired service processing module, and configured to: receive the event information sent by the terminal service processing module, and/or the wireless service processing module, and/or the wired service processing module; perform operations indicated in the event information; and send event information for controlling one or more of the following modules: the terminal service processing module, the wireless service processing module, and the wired service processing module.

10. The system for switching a voice service between different networks according to claim 9, further comprising a wireless service data converting module and a wired service line module that are connected to the CPE, wherein:
the wireless service data converting module is configured to convert the voice data or the event information from the CPE into wireless signals transmissible in the mobile network, or convert the wireless signals from the mobile network into data processible in the CPE; and
the wired service line module is configured to bear the data transmitted between the CPE and the fixed network.

11. The system for switching a voice service between different networks according to claim 10, wherein:
the wireless service data converting module is a High Speed Packet Access (HSPA) wireless network adapter.

12. The system for switching a voice service between different networks according to claim 10 or claim 11, wherein:
the CPE is a home gateway, or router, or personal computer.

13. A method for switching a voice service between different networks, comprising:
establishing a network link between a communication terminal and a fixed network, and registering with the fixed network; and
if the registration fails, switching from the fixed network to a mobile network to transmit event information and/or voice data between the communication terminal and the mobile network.

14. The method for switching a voice service between different networks according to claim 13, wherein the transmitting the event information between the communication terminal and the mobile network is:
receiving the event information from the mobile network, performing operations indicated in the received event information, and sending event information for controlling the communication terminal to perform the corresponding operations to the communication terminal; or
receiving the event information from the communication terminal, performing operations indicated in the received event information, and sending event information for controlling the mobile network to perform the corresponding operations to the mobile network.

15. The method for switching a voice service between different networks according to claim 14, further comprising:
obtaining link connection state information of the fixed network and the mobile network, and judging whether a network link is established between the communication terminal and the fixed network.
